# EUROPEAN PATENT APPLICATION

(11) **EP 4 502 104 A1**
(43) Date of publication of application: **05.02.2025**
(21) Application number: 23780743.3
(22) Date of filing: 29.03.2023
(51) Int. Cl.: C09K 5/14, C08K 3/22, C08L 83/04

(54) **THERMALLY CONDUCTIVE FILLER, METHOD FOR MANUFACTURING THERMALLY CONDUCTIVE FILLER, AND THERMALLY CONDUCTIVE RESIN COMPOSITION**

(30) Priority: 30.03.2022 JP 2022056539
(71) Applicant: Mitsubishi Materials Corporation, Tokyo 100-8117 (JP)
(72) Inventor: NOMI, Katsuya, Saitama-shi, Saitama 330-8508 (JP); NAGIRA, Tsumoru, Saitama-shi, Saitama 330-8508 (JP); NISHIYAMA, Masashi, Saitama-shi, Saitama 330-8508 (JP)
(74) Representative: Hoffmann Eitle
(86) International application number: PCT/JP2023/012917
(87) International publication number: WO 2023/190735

(57) **Abstract**

A thermally conductive filler includes: coarse inorganic particles; and the small inorganic particles, wherein the coarse inorganic particles includes large fused alumina particles having an average particle size in the range of 20 µm or more and 50 µm or less and the medium inorganic particles having an average particle size in the range of 1.0 µm or more and 10 µm or less, in a mass ratio of 60:40 to 100:0, the small inorganic particles have an average particle size of 0.1 µm or more and less than 1.0 µm, and a content of the small inorganic particles is in a range of 15% by mass or more and 30% by mass or less.

## Description

### TECHNICAL FIELD

The present invention relates to a thermally conductive filler, a method for producing the thermally conductive filler, and a thermally conductive resin composition.

Priority is claimed on Japanese Patent Application No. 2022-056539, filed March 30, 2022, the content of which is incorporated herein by reference.

### BACKGROUND ART

In recent years, with the development of electric vehicles and fuel cell vehicles, the current of electrical components is increasing, and the amount of heat generated by the electrical components is also increasing. For example, lithium ion batteries for automobiles generate a large amount of heat in order to continuously output a large current of power for a long period of time, and it is necessary to efficiently dissipate the large amount of heat generated to the outside. For this reason, a thermally conductive resin composition with excellent thermal conductivity may be used as a heat dissipation member in a portion of an electrical component that outputs a large current, such as a lithium ion battery, that requires insulation.

Conventionally, examples of thermally conductive resin compositions include those in which a thermally conductive filler with excellent thermal conductivity is dispersed in a resin material with excellent insulation and moldability. Inorganic materials such as fused alumina (Al₂O₃) and silicon carbide (SiC) are known as thermally conductive fillers (Patent Document 1). Patent Document 1 describes, as thermally conductive fillers, α-alumina (fused alumina) with an average particle size of more than 10 µm and not more than 60 µm, and silicon carbide with an average particle size of 10 µm or less. In addition, it has been considered to use a mixture of thermally conductive fillers having two types of average particle sizes, large and small, as thermally conductive fillers (Patent Document 2). Patent Document 2 describes the use of a mixture of silicon carbide with an average particle size of 50 to 100 µm and silicon carbide with an average particle size of 10 µm or less, in a weight ratio of 1:1 to 3:1, as thermally conductive fillers having two types of average particle sizes.

### CITATION LIST

### PATENT DOCUMENTS

Patent Document 1: Japanese Unexamined Patent Application, First Publication No. H07-304946 (A)
Patent Document 2: Japanese Unexamined Patent Application, First Publication No. 2004-6981 (A)

### SUMMARY OF INVENTION

### TECHNICAL PROBLEM

The thermally conductive filler used in the thermally conductive resin composition is desirably a material that is easily available industrially, has excellent thermal conductivity, is highly fillable in the resin, and is unlikely to excessively increase the hardness of the resin when added to the resin. The fused alumina described in Patent Document 1 is an industrially easily available material, but there is a limit to how much fused alumina alone can improve thermal conductivity. In addition, silicon carbide described in Patent Document 2 has higher thermal conductivity than fused alumina, but is difficult to fill highly into the resin.

The present invention has been made in consideration of the above circumstances, and has an object to provide a thermally conductive filler which uses materials that are easily available industrially, has excellent thermal conductivity, has high fillability into resin, and is not likely to excessively increase the hardness of the resin when added to the resin, a method for producing the same, and a thermally conductive resin composition which has excellent thermal conductivity and low hardness.

### SOLUTION TO PROBLEM

An aspect of the present invention is a thermally conductive filler including: coarse inorganic particles; and the small inorganic particles, wherein the coarse inorganic particles includes large fused alumina particles having an average particle size in the range of 20 µm or more and 50 µm or less and the medium inorganic particles having an average particle size in the range of 1.0 µm or more and 10 µm or less, in a mass ratio of 60:40 to 100:0, the small inorganic particles have an average particle size of 0.1 µm or more and less than 1.0 µm, and a content of the small inorganic particles is in a range of 15% by mass or more and 30% by mass or less.

According to the thermally conductive filler of the present invention having the above-mentioned configuration, small inorganic particles having an average particle size of 0.1 µm or more and less than 1.0 µm are interposed between the gaps between the coarse inorganic particles, so that the thermal conductivity is high. In addition, according to the thermally conductive filler of the present invention, the content of the large fused alumina particles, the medium inorganic particles, and the small inorganic particles is within the above-mentioned range, so that when added to a resin, the hardness of the resin is unlikely to increase excessively. Furthermore, the large fused alumina particles used in the thermally conductive filler of the present invention are easily available industrially. Therefore, by using the thermally conductive filler of the present invention, a thermally conductive resin composition having excellent thermal conductivity and low hardness can be obtained at low cost.

**In** the thermally conductive filler according to the present invention, a thermal conductivity may be 30 W/mK or more at 20°C.

In this case, a thermally conductive resin composition having excellent thermal conductivity can be obtained more reliably.

In the thermally conductive filler according to the present invention, a hardness when 1,100 parts by mass of the filler is added to 100 parts by mass of a silicone resin may be 65 or less, the hardness being measured on with an Asker C hardness scale.

In this case, since the hardness of the resin when added to the silicone resin is the above value, it can be added to various resins other than silicone resin without excessively increasing the hardness.

Other aspect of the present invention is a method for producing the thermally conductive filler according to any one of above-described aspects, the method including the step of: mixing the large fused alumina particles having an average particle size in the range of 20 µm or more and 50 µm or less, the medium inorganic particles having an average particle size, and the small inorganic particles have an average particle size of 0.1 µm or more and less than 1.0 µm, wherein the step of mixing is performed in such a way that a ratio between the large fused alumina particles and the medium inorganic particles in a mass ratio of 60:40 to 100:0; and a content of the small inorganic particles is in a range of 15% by mass or more and 30% by mass or less.

According to the method for producing the thermally conductive filler of the present invention configured as described above, the large fused alumina particles, the medium inorganic particles, and the small inorganic particles are mixed in the above-mentioned ratio, so that the thermally conductive filler of the present invention can be produced industrially advantageously.

Other aspect of the present invention is a thermally conductive resin composition including a resin and the thermally conductive filler according to the above-described aspects of the present invention.

The thermally conductive resin composition of the present invention having the above-mentioned configuration contains the thermally conductive filler of the present invention, and therefore has excellent thermal conductivity and low hardness.

In the thermally conductive resin according to the present invention, a thermal conductivity may be 3.25 W/mK or more at 40°C.

In this case, since the thermally conductive resin composition has a high thermal conductivity at 40°C, it can be advantageously used as a heat dissipation member for electric parts that output a large current, such as a lithium ion battery.

### [Advantageous Effects of Invention]

According to the present invention, it is possible to provide a thermally conductive filler which contains electro-fused alumina particles that are easily available industrially, has excellent thermal conductivity, has high fillability into resin, and is not likely to excessively increase the hardness of the resin when added to the resin, a method for producing the same, and a thermally conductive resin composition which has excellent thermal conductivity and low hardness.

### BRIEF DESCRIPTION OF DRAWINGS

FIG. 1 shows the particle size distribution of the large fused alumina particles used in Example of the present invention.
FIG. 2 shows the particle size distribution of the medium inorganic particles used in Example of the present invention.
FIG. 3 shows the particle size distribution of small inorganic particles used in Example of the present invention.
FIG. 4 is an estimated value of particle size distribution of the mixed powder produced in Example 1 of the present invention.
FIG. 5 is a ternary diagram showing the compositions of the mixed powders produced in Examples 1 to 6 of the present invention and Comparative Examples 1 to 3.

### DESCRIPTION OF EMBODIMENTS

A thermally conductive filler, a method for producing the thermally conductive filler, and a thermally conductive resin composition according to one embodiment of the present invention will be described below. The following embodiment is specifically described to better understand the gist of the invention, and does not limit the present invention unless otherwise specified.

### (Thermal conductive filler)

The thermally conductive filler includes coarse inorganic particles and the small inorganic particles. The coarse inorganic particles include large fused alumina particles having an average particle size in the range of 20 µm to 50 µm and the medium inorganic particles having an average particle size in the range of 1.0 µm to 10 µm in a mass ratio of 60:40 to 100:0. The average particle size of the small inorganic particles is in the range of 0.1 µm to less than 1.0 µm. The average particle sizes of the large fused alumina particles, the medium inorganic particles, and the small inorganic particles are values measured using a laser diffraction scattering type particle size distribution measuring device (MT3300EXII: Microtrack Bell Co., Ltd.). The content of the small inorganic particles is in the range of 15 mass% to 30 mass%.

The fused alumina particles are particles obtained by pulverizing a lump (fused alumina) that has been melted in an electric melting furnace and recrystallized, and have an average sphericity of about 0.7 or less (e.g., 0.2 to 0.8 or 0.3 to 0.8) and a polygonal shape. The average sphericity can be obtained, for example, by analyzing the target powder using ( Fiji imageJ).

The content of the coarse inorganic particles in the thermally conductive filler may be 70% by mass or more and 85% by mass or less, 71% by mass or more and 80% by mass or less, or 72% by mass or more and 75% by mass or less.

The thermally conductive filler may be comprised of coarse inorganic particles and the small inorganic particles.

The large fused alumina particles are not particularly limited in terms of particle shape, and may be, for example, spherical, cubic, or irregularly shaped. The large fused alumina particles may be crushed products that are easily available industrially. The average particle size of the large fused alumina particles is preferably in the range of 25 µm to 45 µm, and more preferably in the range of 30 µm to 40 µm.

The shape of the medium inorganic particles is not particularly limited, and may be, for example, spherical, cubic, or irregularly shaped. The medium inorganic particles are preferably made of a material having a thermal conductivity of 30 W/mK or more at 20°C.

Examples of materials that can be used for the medium inorganic particles include silicon carbide, alumina, aluminum nitride, boron nitride, silicon nitride, magnesium oxide, and zinc oxide. The average particle size of the medium inorganic particles is preferably in the range of 2 µm to 6 µm, and more preferably in the range of 3 µm to 5 µm.

The small inorganic particles are not particularly limited in particle shape, and may be, for example, spherical, cubic, or irregularly shaped. The small inorganic particles are preferably made of a material having a thermal conductivity of 30 W/mK or more at 20°C.

Examples of materials that can be used for the small inorganic particles include silicon carbide, alumina, aluminum nitride, boron nitride, silicon nitride, magnesium oxide, and zinc oxide. The average particle size of the small inorganic particles is preferably in the range of 0.20 µm to 0.80 µm, and more preferably in the range of 0.30 µm to 0.70 µm.

In the thermally conductive filler of this embodiment, the ratio of the average particle size of the medium inorganic particles to the average particle size of the large fused alumina particles is preferably 8/10 or less, more preferably 5/10 or less, and particularly preferably 3/10 or less. The ratio of the average particle size of the medium inorganic particles to the average particle size of the large fused alumina particles is preferably 1/20 or more. Furthermore, the ratio of the average particle size of the small inorganic particles to the average particle size of the large fused alumina particles is preferably 9/100 or less, more preferably 6/100 or less, and particularly preferably 4/100 or less. The ratio of the average particle size of the small inorganic particles to the average particle size of the large fused alumina particles is preferably 1/200 or more.

In the thermally conductive filler of this embodiment, the electrical conductivity is improved by the presence of small inorganic particles in the gaps between the coarse inorganic particles (between large fused alumina particles, between large fused alumina particles and the medium inorganic particles, and between medium inorganic particles). In order to facilitate the presence of small inorganic particles in the gaps between the coarse inorganic particles, in this embodiment, the content ratio of the large fused alumina particles to the medium inorganic particles is set to a mass ratio of 60:40 to 100:0.

The content ratio (mass ratio) of the large fused alumina particles to the medium inorganic particles is preferably 80:20 to 100:0, and more preferably 80:20 to 90:10. If the content of the small inorganic particles is too small, the small inorganic particles interposed between the coarse inorganic particles are reduced, and the effect of improving the electrical conductivity is reduced. If the content of the small inorganic particles is too large, the small inorganic particles are dispersed in the resin of the thermally conductive resin composition, and the hardness of the thermally conductive resin composition may be excessively high. For this reason, in this embodiment, the content of the small inorganic particles relative to the entire thermally conductive filler is set to be in the range of 15% by mass or more and 30% by mass or less. The content of the small inorganic particles is preferably in the range of 20% by mass or more and 30% by mass or less. In addition, in the thermally conductive filler of this embodiment, it is preferable that the particle size distribution of the entire thermally conductive filler has two or more peaks. It is preferable that the distribution is bimodal with two peaks, and more preferably trimodal with three peaks. By having a bimodal or higher particle size distribution, particles of different sizes can easily enter gaps, allowing a larger filling amount to be achieved.

The thermally conductive filler of the present embodiment preferably has a thermal conductivity of 30 W/mK or more as a whole. It is more preferable that the thermal conductivity of each of the large fused alumina particles, the medium inorganic particles, and the small inorganic particles constituting the thermally conductive filler is 30 W/mK or more.

The thermally conductive filler of this embodiment is preferably added in an amount of 600 parts by mass or more and 1500 parts by mass or less, more preferably 800 parts by mass or more and 1300 parts by mass or less, relative to 100 parts by mass of the resin. When the amount of the thermally conductive filler of this embodiment is within the above range, the thermal conductivity can be improved without excessively increasing the hardness of the thermally conductive resin composition. The thermally conductive filler of this embodiment preferably has a hardness of 65 or less as measured by an Asker C hardness scale when 1100 parts by mass of the thermally conductive filler is added to 100 parts by mass of the silicone resin.

According to the thermally conductive filler of the present embodiment having the above-mentioned configuration, the small inorganic particles having an average particle size in the range of 0.1 µm or more and less than 1.0 µm are interposed between the coarse inorganic particles, so that the thermal conductivity is high. **In** addition, according to the thermally conductive filler of the present embodiment, the content of the large fused alumina particles, the medium inorganic particles, and the small inorganic particles is within the above-mentioned range, so that the hardness of the resin is not likely to be excessively high when added to the resin. Furthermore, the large fused alumina particles used in the thermally conductive filler of the present embodiment are easily available industrially. Therefore, by using the thermally conductive filler of the present embodiment, a thermally conductive resin composition having excellent thermal conductivity and low hardness can be obtained at low cost.

In the thermally conductive filler of this embodiment, when the thermal conductivity at 20°C is 30 W/mK or more, a thermally conductive resin composition having excellent thermal conductivity can be obtained more reliably.

The thermal conductivity of the thermally conductive filler at 20°C may be 35 W/mK or more, or may be 40 W/mK or more. The thermal conductivity may be 250 W/mK or less.

Furthermore, in the case of the thermally conductive filler of this embodiment, when 1,100 parts by mass of the filler is added to 100 parts by mass of silicone resin, the hardness is 65 or less as measured by an Asker C hardness scale, so the filler can be added to various resins other than silicone resin without excessively increasing the hardness.

The hardness may be 60 or less, or may be 55 or less.

The hardness may be 0 or greater.

### (Method of manufacturing thermally conductive filler)

In the method for producing the thermally conductive filler of the present embodiment, large fused alumina particles, medium inorganic particles, and the small inorganic particles are mixed. There is no limitation on the order of mixing the large fused alumina particles, the medium inorganic particles, and the small inorganic particles. For example, the large fused alumina particles, the medium inorganic particles, and the small inorganic particles may be mixed simultaneously, a mixture of the large fused alumina particles and the medium inorganic particles may be mixed with the small inorganic particles, a mixture of the medium inorganic particles and the small inorganic particles may be mixed with the large fused alumina particles, or a mixture of the large fused alumina particles and the small inorganic particles may be mixed with the medium inorganic particles. In addition, the mixing may be performed in a dry manner or a wet manner.

The mixing ratio of the large fused alumina particles and the medium inorganic particles is a mass ratio of the large fused alumina particles to the medium inorganic particles of 60:40 to 100:0, preferably 80:20 to 100:0, and more preferably 80:20 to 90:10. The mixing ratio of the small inorganic particles is such that the content of the small inorganic particles relative to the total amount of the large fused alumina particles, the medium inorganic particles, and the small inorganic particles is in the range of 15% by mass to 30% by mass, and preferably in the range of 20% by mass to 30% by mass.

According to the method for producing the thermally conductive filler of the present embodiment configured as described above, the large fused alumina particles, the medium inorganic particles, and the small inorganic particles are mixed in the above-mentioned ratio, so that the thermally conductive filler of the present embodiment can be produced industrially advantageously.

### (Thermal conductive resin composition)

The thermally conductive resin composition of the present embodiment contains a resin and the thermally conductive filler of the present embodiment.

The thermally conductive resin composition may contain, for example, 600 parts by mass or more and 1500 parts by mass or less of the thermally conductive filler per 100 parts by mass of the resin. The thermal conductivity at 40°C is preferably 3.25 W/mK or more, and more preferably 3.40 W/mK or more.

The resin contained in the thermally conductive resin composition is not particularly limited, and a known resin can be used. The resin may be a thermoplastic resin or a thermosetting resin. Examples of the resin include a hydrocarbon resin, an unsaturated polyester resin, an acrylic resin, a vinyl ester resin, an epoxy resin, a xylene formaldehyde resin, a guanamine resin, a diallyl phthalate resin, a phenol resin, a furan resin, a polyimide resin, a melamine resin, a urea resin, and a silicone resin. **In** this embodiment, the resin includes a rubber.

The thermally conductive resin composition of the present embodiment configured as described above contains the thermally conductive filler of the present embodiment, and therefore has excellent thermal conductivity and low hardness. Therefore, it can be used as a heat dissipation member for various parts. In particular, a thermally conductive resin composition having a thermal conductivity of 3.25 W/mK or more at 40°C can be advantageously used as a heat dissipation member for electric parts that output a large current, such as a lithium ion battery.

Although one embodiment of the present invention has been described above, this embodiment is presented as an example and is not intended to limit the scope of the invention. This embodiment can be implemented in various other forms, and various omissions, substitutions, and modifications can be made without departing from the gist of the invention. This embodiment and its modifications are included in the scope of the invention and its equivalents described in the claims, as well as in the scope and gist of the invention.

### EXAMPLES

The results of confirmation experiments conducted to confirm the effectiveness of the present invention will be described below.

The large fused alumina particles, the medium inorganic particles, and the small inorganic particles used in this example are as follows: The particle size distribution was measured using a laser diffraction scattering type particle size distribution measuring device (MT3300EXII: Microtrack Bell Corporation).

### (1) Large fused alumina particles

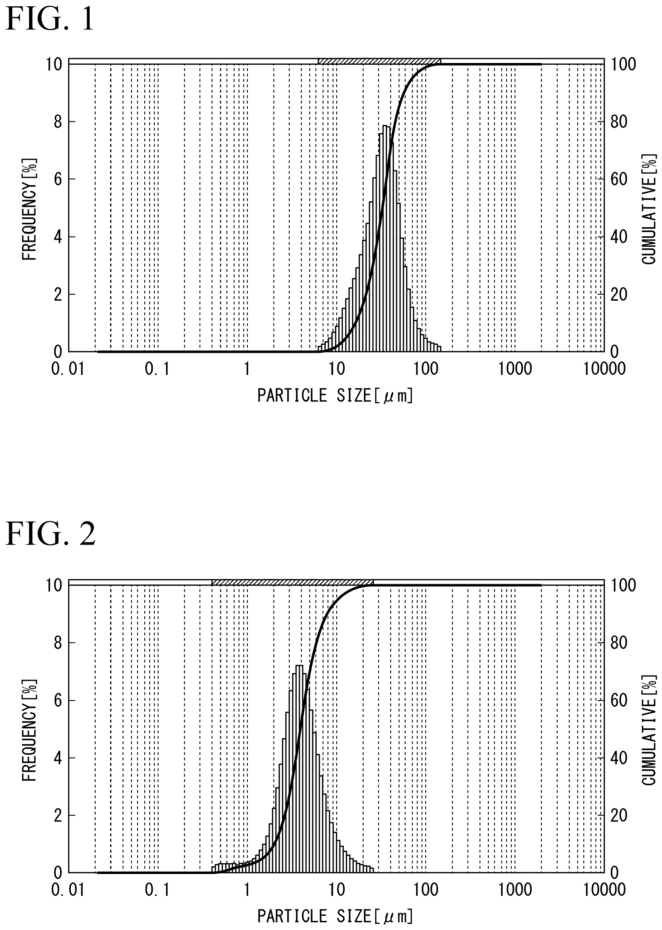

Alumina particles with an average particle size of 33.3 µm and a thermal conductivity of 30 W/mK or more at 20°C. Figure 1 shows the particle size distribution.

### (2) Medium inorganic particles

Low soda alumina particles with an average particle size of 3.9 µm and a thermal conductivity of 30 W/mK or more at 20°C. Figure 2 shows the particle size distribution.

### (3) Small inorganic particles

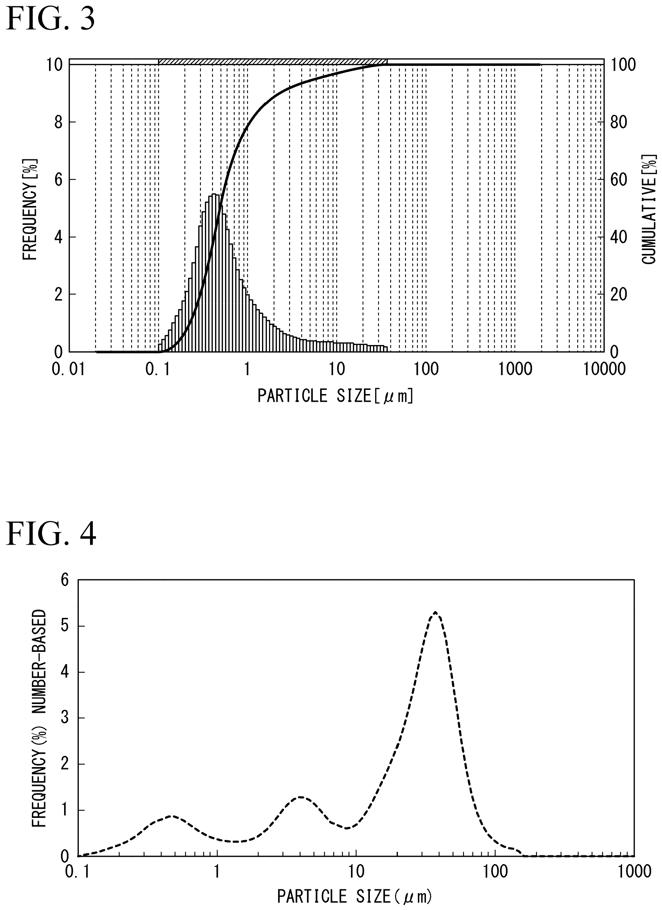

Low soda alumina particles with an average particle size of 0.49 µm and a thermal conductivity of 30 W/mK or more at 20°C. Figure 3 shows the particle size distribution.

### [Experimental Example 1]

Each particle was weighed and placed in a mortar and mixed using a pestle so that the content ratio (mass ratio) of the large fused alumina particles to the medium inorganic particles and the content rate of the small inorganic particles were the values shown in Table 1 below to prepare a mixed powder.

0.5 g of silicone rubber (KE-1051JA, Shin-Etsu Chemical Co., Ltd.) was placed in a container, and the above mixed powder was added in 0.5 g portions and kneaded for 2 minutes at 2000 rpm in a centrifugal defoamer. The amount of mixed powder added when the resulting mixture was touched with a finger and became brittle and unable to be molded was taken as the limit filling amount. The results are shown in Table 1 below.

**[Table 1]**

| Filling limit (Mass parts /100 mass parts of silicone rubber) | | | | | | | | | |
|---|---|---|---|---|---|---|---|---|---|
| | | Large fused alumina particles: Medium inorganic particles | | | | | | | |
| | | 40:60 | 50:50 | 60:40 | 70:30 | 80:20 | 85:15 | 90:10 | 100:0 |
| Content of Small inorganic particles (mass%) | 40 | - | - | 1100 | 1100 | 1100 | 900 | - | - |
| | 35 | - | - | 1200 | 1200 | 1200 | 1200 | 1300 | 1300 |
| | 30 | - | 1000 | 1300 | 1300 | 1300 | 1400 | 1500 | 1400 |
| | 25 | 900 | 1300 | 1400 | 1400 | 1400 | 1400 | 1400 | 1400 |
| | 20 | 1000 | 1400 | 1300 | 1400 | 1500 | 1400 | 1500 | 1300 |
| | 15 | 1100 | 1300 | 1400 | 1400 | 1500 | 1300 | 1400 | 1300 |
| | 10 | - | 1300 | 1300 | 1300 | 1300 | 1200 | 1100 | 1000 |
| | 5 | - | 1200 | 1400 | 1300 | 1200 | 1100 | - | - |
| | 0 | - | - | 1200 | 1100 | 1000 | 1100 | - | - |

From the results in Table 1, it was confirmed that a mixture in which the blending amounts (mass ratio) of the large fused alumina particles and the medium inorganic particles are in a ratio of 60:40 to 100:0 and the content of small inorganic particles is in the range of 15% by mass or more and 30% by mass or less has a limit filling amount of 1,300 parts by mass or more, and thus has a high filling amount into the silicone rubber.

### [Example (Ex.) 1 of the present invention]

A mixed powder was prepared by mixing 68% by mass of the large-diameter fused alumina particles, 17% by mass of the medium-diameter inorganic particles, and 15% by mass of the small-diameter inorganic particles using a pestle and mortar. The resulting mixed powder had a content ratio of large-diameter fused alumina particles to medium-diameter inorganic particles of 80:20.

A few grams of the mixed powder was added to a rubber mixture containing 1 g of silicone rubber (KE-1051J A) and 1 g of silicone rubber (KE-1051J B), and the mixture was kneaded in a centrifugal defoamer at 2000 rpm for 2 minutes, repeatedly, until a total of 22 g of the mixed powder was added to the rubber mixture. The rubber mixture to which the mixed powder was added was left to stand at room temperature (25°C) for 24 hours to harden, resulting in a resin composition.

The particle size distribution of the mixed powder obtained in Example 1 of the present invention was estimated from the particle size distribution and the blending amounts of the large fused alumina particles, the medium inorganic particles, and the small inorganic particles. The results are shown in Figure 4.

From Figure 4, it can be seen that the mixed powder obtained in Example 1 of the present invention has three peaks at 33.3 µm, 3.9 µm, and 0.49 µm.

### [Examples (Ex.) 2 to 6 of the present invention, Comparative Examples (C.E.) 1 to 3]

A resin composition was obtained in the same manner as in Example 1 of the present invention, except that the ratios of the large fused alumina particles, the medium inorganic particles, and the small inorganic particles in the mixed powder were set to the ratios shown in Table 2 below.

Table 1 shows the content ratio (mass ratio) of the large fused alumina particles to the medium inorganic particles in the mixed powders produced in Examples 1 to 6 of the present invention and Comparative Examples 1 to 3.

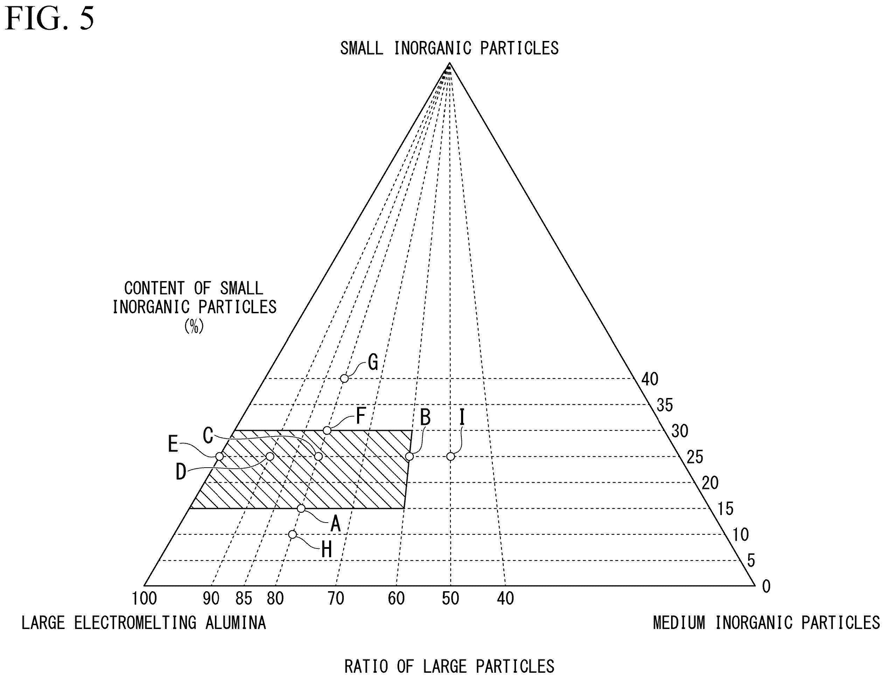

FIG. 5 shows a ternary diagram illustrating the compositions of the mixed powders produced in Inventive Examples 1 to 6 and Comparative Examples 1 to 3.

### [Evaluation]

The thermal conductivity and hardness of the resin compositions obtained in Inventive Examples 1 to 6 and Comparative Examples 1 to 3 were measured as follows. The results are shown in Table 1.

### (Thermal Conductivity)

The cured resin composition was molded into 28 mm x 28 mm x 3 mm and 28 mm x 28 mm x 5 mm, and measured using a thermal conductivity measuring device (IE-1237, manufactured by Iwasaki Electric Co., Ltd.). The measurement conditions were a high temperature side of the device at 80°C and a low temperature side at 15°C, and the sample temperature was measured at about 40°C. The average of the thermal conductivity of the resin composition with a thickness of 3 mm and the thermal conductivity of the resin composition with a thickness of 5 mm was taken as the thermal conductivity of the resin composition at 40°C.

### (Hardness)

Since the resin composition of the present invention is deformable even after curing, the resin composition was molded into a thickness of 7 mm by hand press to prepare a sample for hardness measurement. The hardness of the obtained sample was measured using an Asker C hardness tester.

**[Table 2]**

| | Composition of mixed powder | | | | | Resin Composition | |
|---|---|---|---|---|---|---|---|
| | Location in Triangular diagram | Large fused alumina particles (mass%) | Medium inorganic particles (mass%) | Small inorganic particles (mass%) | Large fused alumina particles: Medium inorganic particles (mass ratio) | Thermal conductivity (W/mK) | Hardness |
| Ex. 1 | A | 68.0 | 17.0 | 15.0 | 80:20 | 3.29 | 58 |
| Ex. 2 | B | 45.0 | 30.0 | 25.0 | 60:40 | 3.31 | 65 |
| Ex. 3 | C | 60.0 | 15.0 | 25.0 | 80:20 | 3.49 | 56 |
| Ex. 4 | D | 67.5 | 7.5 | 25.0 | 90:10 | 3.58 | 54 |
| Ex. 5 | E | 75.0 | 0.0 | 25.0 | 100:0 | 3.41 | 63 |
| Ex. 6 | F | 56.0 | 14.0 | 30.0 | 80:20 | 3.42 | 55 |
| C.E. 1 | G | 48.0 | 12.0 | 40.0 | 80:20 | 3.17 | 80 |
| C.E. 2 | H | 72.0 | 18.0 | 10.0 | 80:20 | 3.10 | 67 |
| C.E. 3 | I | 37.5 | 37.5 | 25.0 | 50:50 | 3.23 | 75 |

From the results in Table 2, it can be seen that the resin compositions obtained in Examples 1 to 6 of the present invention, which used mixed powders in which the contents of the large fused alumina particles, the medium inorganic particles, and the small inorganic particles were within the ranges of the present invention, had a high thermal conductivity of 3.25 W/mK or more and a low hardness of 65 or less as measured by an Asker C hardness scale. The reason why the resin compositions obtained in Examples 1 to 6 of the present invention exhibited high thermal conductivity is that the small inorganic particles were interposed between the coarse inorganic particles (the large fused alumina particles and the medium inorganic particles), thereby increasing the thermal conductivity of the resin composition. In addition, the reason why the hardness was low in the resin compositions obtained in Examples 1 to 6 of the present invention is that the small inorganic particles were interposed between the coarse inorganic particles, and the amount of small inorganic particles dispersed in the resin was small.

In contrast, the resin compositions obtained in Comparative Examples 1 to 3 used the same large fused alumina particles, the medium inorganic particles, and the small inorganic particles as those in Examples 1 to 6 of the present invention, but the thermal conductivity of the resin composition was lower than 3.25 W/mK, and the hardness measured by the Asker C hardness scale exceeded 65. In particular, the hardness of the resin composition in Comparative Example 1 was remarkably high at 80. It is believed that the resin composition of Comparative Example 1 had a higher proportion of small inorganic particles than the range of the present invention, and the amount of the large fused alumina particles and the medium inorganic particles was relatively reduced, resulting in a lower thermal conductivity. It is also believed that the resin composition of Comparative Example 1 had a higher hardness because the amount of small inorganic particles dispersed in the resin was increased. It is also believed that the resin composition of Comparative Example 2 had a lower proportion of the small inorganic particles than the range of the present invention, and the amount of the large fused alumina particles and the medium inorganic particles was relatively increased, resulting in a larger number of voids not interposed by small inorganic particles, resulting in a lower thermal conductivity. It is believed that the resin composition of Comparative Example 3 had a lower thermal conductivity because the ratio of the large fused alumina particles to the medium inorganic particles was lower than the range of the present invention. It is also believed that the resin composition of Comparative Example 3 had a higher hardness of 75 because the ratio of the medium inorganic particles and the small inorganic particles to the large fused alumina particles was higher, increasing the specific surface area of the entire thermally conductive filler.

### INDUSTRIAL APPLICABILITY

It is possible to provide a thermally conductive filler that contains fused alumina particles that are easily available industrially, has excellent thermal conductivity, has high filling ability into resin, and is not likely to excessively increase the hardness of the resin when added to the resin, a method for producing the same, and a thermally conductive resin composition that has excellent thermal conductivity and low hardness.

## Claims

1. A thermally conductive filler comprising:
coarse inorganic particles; and
small inorganic particles, wherein
the coarse inorganic particles includes large fused alumina particles having an average particle size in the range of 20 µm or more and 50 µm or less and the medium inorganic particles having an average particle size in the range of 1.0 µm or more and 10 µm or less, in a mass ratio of 60:40 to 100:0,
the small inorganic particles have an average particle size of 0.1 µm or more and less than 1.0 µm, and
a content of the small inorganic particles is in a range of 15% by mass or more and 30% by mass or less.

2. The thermally conductive filler according to Claim 1, wherein a thermal conductivity is 30 W/mK or more at 20°C.

3. The thermally conductive filler according to Claim 1, wherein a hardness when 1,100 parts by mass of the filler is added to 100 parts by mass of a silicone resin is 65 or less, the hardness being measured on with an Asker C hardness scale.

4. A method for producing the thermally conductive filler according to any one of Claims 1 to 3, comprising the step of:
mixing the large fused alumina particles having an average particle size in the range of 20 µm or more and 50 µm or less, the medium inorganic particles having an average particle size, and the small inorganic particles have an average particle size of 0.1 µm or more and less than 1.0 µm, wherein
the step of mixing is performed in such a way that a ratio between the large fused alumina particles and the medium inorganic particles in a mass ratio of 60:40 to 100:0; and a content of the small inorganic particles is in a range of 15% by mass or more and 30% by mass or less.

5. A thermally conductive resin composition comprising a resin and the thermally conductive filler according to Claim 1.

6. The thermally conductive resin composition according to Claim 5, wherein a thermal conductivity is 3.25 W/mK or more at 40°C.
